# EUROPEAN PATENT SPECIFICATION

(11) **EP 1 674 551 B1**
(45) Date of publication and mention of the grant of the patent: **28.07.2010**
(21) Application number: 05257493.6
(22) Date of filing: 06.12.2005
(51) Int. Cl.: C09K 21/14, C08L 67/04, C08K 3/00

(54) **Flame retardant resin composition**
Flammwidrige Harzzusammensetzung
Composition de résine ignifuge

(30) Priority: 24.12.2004 JP 2004374114
(43) Date of publication of application: 28.06.2006
(73) Proprietor: Shin-Etsu Chemical Co., Ltd., Chiyoda-ku, Tokyo (JP)
(72) Inventor: Ihara, Toshiaki, c/o Silicone-Electronics Material, Matsuida-machi Usui-gun Gunma-ken (JP); Tanaka, Masaki, c/o Silicone-Electronics Material, Matsuida-machi Usui-gun Gunma-ken (JP); Matsumura, Kazuyuki, Silicone-Electronics Material, Matsuida-machi Usui-gun Gunma-ken (JP)
(74) Representative: Stoner, Gerard Patrick

(56) References cited:
- EP-A- 0 924 166
- EP-A- 1 389 630
- EP-A- 1 564 243
- US-A- 3 936 416
- US-A1- 2001 020 537
- US-B1- 6 444 315
- DATABASE WPI Section Ch, Week 200451 Derwent Publications Ltd., London, GB; Class A23, AN 2004-529095 XP002378446 & JP 2004 190025 A (TORAY IND INC) 8 July 2004 (2004-07-08)
- DATABASE WPI Section Ch, Week 200450 Derwent Publications Ltd., London, GB; Class A23, AN 2004-520613 XP002378447 & JP 2004 175831 A (FUJITSU LTD) 24 June 2004 (2004-06-24)
- DATABASE WPI Section Ch, Week 199631 Derwent Publications Ltd., London, GB; Class A26, AN 1996-306895 XP002378448 & JP 08 134455 A (MITSUI TOATSU CHEM INC) 28 May 1996 (1996-05-28)
- DATABASE WPI Section Ch, Week 199312 Derwent Publications Ltd., London, GB; Class A17, AN 1993-096857 XP002378449 & JP 05 039394 A (SAKAI CHEM IND CO LTD) 19 February 1993 (1993-02-19)

## Description

This invention relates to flame retardant resin compositions comprising a resin derived from a natural product as a base and ammonium polyphosphate as a flame retardant. Preferred embodiments provide a flame retardant resin composition of the environmental conservation type which is fully safe in that the composition eliminates the evolution of halogen and formaldehyde gases and prevents phosphate or red phosphorus from being leached out and which restrains the phosphorus-assisted hydrolysis of the resin by virtue of the surface coverage of ammonium polyphosphate flame retardant with a water resistant resin.

### BACKGROUND

From the aspects of safety and long-term conservation of the global environment, great efforts have been devoted to the development and utilization of bio-plastics or biodegradable plastics. Concurrently, the replacement of the existing products using the following compounds is in progress.
(1) Compositions loaded with bromine or chlorine-based flame retardants evolve halogen gases. They are characterized by high flame retardance, small amounts of use, and good mechanical strength and other properties. On fire, however, they evolve large volumes of halogen gases so that persons within the building may be unable to breathe, sometimes with fatal consequences.
(2) melamine-formaldehyde resins evolve formaldehyde with the passage of time and are thus prohibited from use in automobile and house interiors. In the prior art, some ammonium polyphosphate flame retardants are used in the form coated with melamine-formaldehyde resins.
(3) Phosphates are readily leached out of the resin surface. A concern is paid to the toxicity of phosphates which are discharged to the natural world.
(4) Red phosphorus is highly flame retardant due to a high phosphorus concentration. On incomplete combustion, however, it generates highly toxic phosphine gas. It also has the risk of spontaneous ignition by friction or impact.

Bio-plastics are prepared from natural products such as plants and microorganism products and become of interest as the countermeasures to the oil resource depletion and the global warming. Typical bio-plastics are aliphatic polyester resins, which are prepared, for example, by dehydrating condensation of aliphatic hydroxycarboxylic acids, ring-opening polymerization of lactones, or dehydrating condensation of aliphatic diols and dicarboxylic acids. The utilization of these bio-plastics as durable materials for electronic equipment has already started. However, it is difficult to impart flame retardance to the bio-plastics. While great efforts have been devoted to research as described below, there have been developed no bio-plastic compositions having a satisfactory flame retardant effect.
(1) JP-A 2004-75772 describes a biodegradable resin composition comprising a biodegradable resin and a filler surface coated with the biodegradable resin.
(2) JP-A 2004-131671 describes a biodegradable resin composition comprising a polylactic acid, a silicone dispersant, and a polyester of lactic acid.
(3) JP-A 2004-161790 describes a biodegradable resin composition comprising a polylactic acid, a biodegradable resin other than polylactic acid, a silicone additive, and a polyester of lactic acid.
(4) JP-A 2004-190025 describes a resin composition comprising a polylactic acid resin and at least two flame retardants selected from bromine-based flame retardants, chlorine-based flame retardants, phosphorus-based flame retardants, nitrogen compound-based flame retardants, and silicone-based flame retardants.

A consideration of the environment and the safety relative to living bodies restricts the appropriate flame retardant to metal hydroxides, silicone-based flame retardants and ammonium polyphosphate.

The four compositions described above have two common problems. One is a shortage of flame retardance even when silicone-based flame retardants and metal hydroxides are added to bio-plastics. The other problem is associated with the addition of ammonium polyphosphate to bio-plastics. If the ammonium polyphosphate has not been surface treated, it is poorly dispersible in the resin and less resistant to water, to a degree which allows phosphoric acid to leach out, promoting quick degradation of bio-plastics with time. Although ammonium polyphosphate is often coated with melamine-formaldehyde resins, the timed release of formaldehyde is undesirable. Silane coupling agents, titanium-based coupling agents, and aluminum-based coupling agents are unsuitable to cover the entire surface of ammonium polyphosphate, leading to insufficient dispersion, water resistance and flame retardance.

Due to a high phosphorus content and the inclusion in the molecule of nitrogen which allegedly has a synergistic effect with phosphorus, ammonium polyphosphate is expected to impart high flame retardance when added to various resin compositions. In addition, ammonium polyphosphate is believed fully safe because it evolves no toxic gas by itself and it is not readily leached out.

However, ammonium polyphosphate is problematic with respect to water resistance. When resin compositions loaded with ammonium polyphosphate are held under hot humid conditions, there arise problems like bleeding and substantial deterioration of electrical properties. For surface treatment of fibers, ammonium polyphosphate is generally coated in emulsion liquid form. Since ammonium polyphosphate tends to agglomerate due to moisture absorption, the surface treatment becomes non-uniform, failing to develop the flame retardant effect to a full extent. A number of studies have been made to address this problem.

One solution is the treatment of ammonium polyphosphate particles with melamine compounds for coating the particle surface therewith as described in JP-B 53-15478, JP-B 52-39930, JP-A 61-103962, and JP-A 8-183876. These methods, however, still suffer from several issues including the difficulty of preparation, the agglomeration of particles, yet insufficient water resistance, and the evolution of formaldehyde. Additionally, since melamine compounds are less dispersible in various resins, the melamine compound coating adversely affects the dispersion of ammonium polyphosphate in resins.

Means for improving the water resistance and dispersibility of ammonium polyphosphate, proposed so far, include treatments with silane-derived coupling agents as disclosed in JP-B 6-6655, JP-B 6-4735 and JP-B 6-18944. These treatments are still incomplete in surface coverage, provide insufficient water resistance, and fail to overcome the problems including a lessening of electrical properties.

JP-A 8-134455 discloses to modify ammonium polyphosphate with microparticulate silica surface coated with silicone oil. This treatment, however, provides insufficient water resistance and fails to overcome the problems including degraded electrical properties.

It was also proposed to add silicone oil and/or silicone resin and ammonium polyphosphate separately to thermoplastic resins, as disclosed in USP 4,871,795 (Pawar) and JP-A 5-39394. These methods still leave the problem that ammonium polyphosphate picks up moisture and bleeds to the surface, detracting from physical properties of resin.

US 2001/0020537 discloses a fire-retardant adhesive and fire-retardant adhesive film comprising (A) a polyester resin, (B) a nitrogen-containing organic flame retardant and (C) a boron compound.

JP 2004175831A discloses a resin containing polylactic acid, glass fibre filler and a phosphoric acid flame retardant. The resin can be used as a resin case for electronic devices.

US 6444315 discloses a flame retardant made by applying an organic silicon composition to a powder flame retardant such as ammonium polyphosphate. The organic silicon composition is selected from or a mixture of one or more organofunctional silane(s), one or more oligomeric organosilanes, a solvent containing preparation of monomeric organosilanes / oligomeric organic organosiloxanes or a preparation based on water soluble organopolysiloxanes.

EP 0924166 discloses a core material of ammonium polyphosphate, a thermosetting resin, a melamine monomer or a surface heating agent, the core coated with a layer of thermoplastic resin.

US 3936416 discloses a non-burning composition comprising at least one of: ammonium polyphosphate and dipentaerythritol; melamine pyrophosphate and dipentaerythritol; the reaction product of phosphoric acid, urea, dipentaerythritol and melamine; and the reaction product of phosphoric acid, phosphorous pentoxide and at least one of pentaerythritol, dipentaerythritol and tripentaerythritol, and melamine.

JP 19910285412 discloses a fire-retardant polypropylene resin formulated with (A) an organic silicone compound, (B) ammonium,polyphosphate (may be melamine modified) and (C) a polyhydric alcohol.

An aim herein is to enable the provision of new and useful flame retardant resin compositions of an environmentally conservative type, featuring a high level of flame retardance (such as V-0), water resistance, a good dispersion of ammonium polyphosphate in the resin, and safety, such as no evolution of halogen and formaldehyde gases.

The inventors have found that a flame retardant resin composition comprising (A) 100 parts by weight of a bio-plastic, (B) 5 to 100 parts by weight of an ammonium polyphosphate (sometimes abbreviated as APP) surface treated with a surface treating agent which does not generate formaldehyde under room temperature conditions, does not generate halogen upon combustion, and imparts water resistance, and (C) 0 to 80 parts by weight of a flame retardant co-agent, does not evolve halogen and formaldehyde gases, can exhibit a high level of flame retardance clearing UL-94 rating V-0, water resistance and aesthetic appearance due to good dispersion of APP in the resin.

In one preferred aspect, in a study on the surface treatment of APP the inventors discovered that a surface-coated ammonium polyphosphate having improved water resistance and dispersibility in resin can be prepared by treating surfaces of ammonium polyphosphate with 0.2-20% by weight of a specific silicone-base water repellent treating agent. This is disclosed in EP 1564243A published after the present priority date.
The silicone-base water repellent treating agent comprises a co-hydrolytic condensate obtained through co-hydrolytic condensation of (i) 100 parts by weight of an organosilicon compound of the general formula (1) and (ii) 0.5 to 49 parts by weight of an amino group-containing alkoxysilane of the general formula (2) or a partial hydrolyzate thereof in the presence of an organic or inorganic acid or a co-hydrolytic condensate obtained through co-hydrolytic condensation of (i) 100 parts by weight of an organosilicon compound of the general formula (1), (ii) 0.5 to 49 parts by weight of an amino group-containing alkoxysilane of the general formula (2) or a partial hydrolyzate thereof, (iii) 0.1 to 10 parts by weight of a microparticulate inorganic oxide and/or (iv) 0.1 to 20 parts by weight of a bis(alkoxysilyl) group-containing compound of the general formula (3) or a partial hydrolyzate thereof in the presence of an organic or inorganic acid.

The general formulae (1), (2) and (3) are:

(R¹)ₐ(OR²)_{b}SiO_{(4-a-b)/2} (1)

wherein R¹ is a C₁-C₆ alkyl group, R² is a C₁-C₄ alkyl group, a is a positive number of 0.75 to 1.5, b is a positive number of 0.2 to 3, satisfying 0.9 < a+b ≤ 4,

R³R⁴NR⁵-SiR⁶_{d}(OR²)_{3-d} (2)

wherein R² is as defined above, R³ and R⁴ are each independently hydrogen or a C₁-C₁₅ alkyl or aminoalkyl group, R⁵ is a divalent C₁-C₁₈ hydrocarbon group, R⁶ is a C₁-C₄ alkyl group, and d is 0 or 1,

(R¹)ₖ(OR²)₃₋ₖSi-Y-Si(R¹)ₖ(OR²)₃₋ₖ (3)

wherein R¹ and R² are as defined above, Y is a divalent organic group, -(OSi(R⁷)₂)ₘO- or -R-(SiR7₂O)ₘ-SiR⁷₂-R-, R⁷ is a C₁-C₆ alkyl group, R is a divalent C₁-C₆ hydrocarbon group, m is an integer of 1 to 30, and k is 0 or 1.

The inventors have discovered that using ammonium polyphosphate surface treated with the above-described organosilicon condensate, or ammonium polyphosphate surface treated with a polyester resin or polyvinyl alcohol resin as component (B) that is the ammonium polyphosphate surface treated with a surface treating agent, they can obtain a flame retardant resin composition based on bio-plastics featuring a high level of flame retardance, water resistance, good dispersion of ammonium polyphosate in the resin, and safety or no evolution of halogen and formaldehyde gases.

Accordingly the present invention provides a flame retardant resin composition comprising
(A) 100 parts by weight of polylactic acid;
(B) 5 to 100 parts by weight of an ammonium polyphosphate surface treated with a surface treating agent which does not generate formaldehyde under room temperature conditions, does not generate halogen upon combustion, and imparts water resistance; and
(C) 0 to 80 parts by weight of a flame retardant co-agent,
wherein the surface treating agent in component (B) is any one selected from a group consisting of a polyester resin, a polyvinyl alcohol resin and an organosilicon condensate comprising
a co-hydrolytic condensate obtainable through co-hydrolytic condensation of (i) 100 parts by weight of organosilicon compound having the general formula (1) and (ii) 0.5 to 49 parts by weight of amino group-containing alkoxysilane having the general formula (2) or partial hydrolysate thereof, in the presence of organic acid or inorganic acid, or
a co-hydrolytic condensate obtainable through co-hydrolytic condensation of (i) 100 parts by weight of organosilicon compound having the general formula (1), (ii) 0.5 to 49 parts by weight of amino group-containing alkoxysilane having the general formula (2) or a partial hydrolysate thereof, and (iii) 0.1 to 10 parts by weight of microparticulate inorganic oxide and/or (iv) 0.1 to 20 parts by weight of bis(alkoxysilyl) group-containing compound having the general formula (3) or partial hydrolysate thereof, in the presence of organic acid or inorganic acid,
the general formulae (1), (2) and (3) being:

(R¹)ₐ(OR²)_{b}SiO_{(4-a-b)/2} (1)

wherein R¹ is C₁-C₆ alkyl group, R² is C₁-C₄ alkyl group, a is a positive number of 0.75 to 1.5, b is a positive number of 0.2 to 3, satisfying 0.9 < a+b ≤ 4,

R³R⁴NR⁵-SiR⁶_{d} (OR²)_{3-d} (2)

wherein R² is as defined above, R³ and R⁴ are each independently hydrogen or C₁-C₁₅ alkyl or aminoalkyl group, R⁵ is a divalent C₁-C₁₈ hydrocarbon group, R⁶ is a C₁-C₄ alkyl group, and d is 0 or 1,

(R¹)ₖ(OR²)₃₋ₖSi-Y-Si (R¹)ₖ(OR²)₃₋ₖ (3)

wherein R¹ and R² are as defined above, Y is a divalent organic group, -(OSi (R⁷)₂)ₘO- or -R-(SiR⁷₂O)ₘSiR⁷₂-R-, R⁷ is a C₁-C₆ alkyl group, R is a divalent C₁-C₆ hydrocarbon group, m is an integer of 1 to 30, and k is 0, 1 or 2.

Flame retardant resin compositions disclosed herein can have a high level of safety, flame retardance, water resistance, and good dispersion of ammonium polyphosphate in the resin. Methods of preparing them are another aspect.

As used herein, the term "C₁-C₆," for example, used with alkyl or hydrocarbon groups means that the groups have 1 to 6 carbon atoms.

### FURTHER EXPLANATIONS; OPTIONS AND PREFERENCES

### Component A

Component (A) is polylactic acid which may be obtained dehydrating condensation of lactic acid.

In the practice of the invention, the polylactic acid resin derived from natural product may be used in admixture with another thermoplastic resin or elastomer. Suitable other thermoplastic resins include thermoplastic resins and elastomers which are blow moldable, extrudable or injection moldable. Illustrative of such thermoplastic resins and elastomers are low-density polyethylene, high-density polyethylene, linear low-density polyethylene, ultra-low-density polyethylene, ultra-high molecular weight polyethylene, polypropylene, polypropylene-based elastomers, polystyrene, polystyrene-based elastomers, ABS resins, ethylene-vinyl acetate copolymers, saponified ethylene-vinyl acetate copolymers such as ethylene-vinyl alcohol copolymers, ethylene-ethyl acrylate copolymers, ethylene-acrylic acid copolymers, ethylene-methyl acrylate copolymers, ethylene-acrylic amide copolymers, ethylene-methacrylic acid copolymers, ethylene-methyl methacrylate copolymers, ethylene-glycidyl methacrylate copolymers, ethylene-maleic anhydride copolymers, and ionomer resins. They may be used alone or in admixture.

In the embodiment wherein the polylactic acid resin is admixed with the other thermoplastic resin, it is preferred that 1 to 100 parts, more preferably 10 to 100 parts by weight of the polylactic acid resin is added to 100 parts by weight of the other thermoplastic resin.

### Component B

Component (B) is an ammonium polyphosphate surface treated with a surface treating agent which does not generate formaldehyde under room temperature conditions, does not generate halogen upon combustion, and imparts water resistance. The ammonium polyphosphate (sometimes abbreviated as APP) subject to surface treatment is in particulate form and should preferably have a weight average molecular weight (Mw) of 2,000 to 10,000,000, more preferably 10,000 to 1,000,000, as measured by gel permeation chromatography (GPC) versus polystyrene standards. An APP with a Mw of less than 2,000 can be leached out in water even after it is compounded in the resin whereas an APP with a Mw of more than 10,000,000 may have too large a particle size to disperse in the resin.

For dispersion in the surface treating agent, the ammonium polyphosphate should preferably have an average particle size of up to 30 µm, more preferably 1 to 30 µm, even more preferably 3 to 20 µm, as measured by a laser scattering type particle size distribution meter.

The surface treating agent with which surfaces of APP particles are treated is one which generates neither formaldehyde under room temperature conditions nor halogen upon combustion. In an alternative definition, water-resistant surface treating agents other than formaldehyde-based resins (such as melamine-formaldehyde resins) and halogen or halide-based resins are intended.

Studying the surface treatment of APP with a surface treating agent having a high level of safety and excellent water resistance, the inventors have discovered that specific organosilicon condensates, polyester resins and vinyl acetate resins afford good coverage of surfaces of ammonium polyphosphate.

The organosilicon condensate which can be used herein as the surface treating agent is preferably a compound capable of imparting excellent water repellency to substrates, and more preferably the reaction product of a siloxane oligomer with an amino group-containing organosilicon compound.

Specifically, the surface treating agent used herein comprises a co-hydrolytic condensate obtained through co-hydrolytic condensation of (i) 100 parts by weight of an organosilicon compound of the general formula (1):

(R¹)ₐ(OR²)_{b}SiO_{(4-a-b)/2} (1)

wherein R¹ is a C₁-C₆ alkyl group, R² is a C₁-C₄ alkyl group, a is a positive number of 0.75 to 1.5, b is a positive number of 0.2 to 3, satisfying 0.9 < a+b ≤ 4, and (ii) 0.5 to 49 parts by weight of an amino group-containing alkoxysilane of the general formula (2):

R³R⁴NR⁵-SiR⁶_{d}(OR²)_{3-d} (2)

wherein R² is as defined above, R³ and R⁴ are each independently hydrogen or a C₁-C₁₅ alkyl or aminoalkyl group, R⁵ is a divalent C₁-C₁₈ hydrocarbon group, R⁶ is a C₁-C₄ alkyl group, and d is 0 or 1, or a partial hydrolyzate thereof in the presence of an organic or inorganic acid. Alternatively, the surface treating agent used herein comprises a co-hydrolytic condensate obtained through co-hydrolytic condensation of (i) 100 parts by weight of an organosilicon compound of the general formula (1), (ii) 0.5 to 49 parts by weight of an amino group-containing alkoxysilane of the general formula (2) or a partial hydrolyzate thereof, and (iii) 0.1 to 10 parts by weight of a microparticulate inorganic oxide and/or (iv) 0.1 to 20 parts by weight of a bis(alkoxysilyl) group-containing compound of the general formula (3):

(R¹)ₖ(OR²)₃₋ₖSi-Y-Si(R¹)ₖ(OR²)₃₋ₖ (3)

wherein R¹ and R² are as defined above, Y is a divalent organic group, -(OSi(R⁷)₂)ₘO- or -R-(SiR⁷₂O)ₘ-SiR⁷₂-R-, R⁷ is a C₁-C₆ alkyl group, R is a divalent C₁-C₆ hydrocarbon group, m is an integer of 1 to 30, and k is 0 or 1 or a partial hydrolyzate thereof in the presence of an organic or inorganic acid.

Satisfactory water repellency is achieved by the use of these co-hydrolytic condensates probably because the amino groups in component (ii) are included within the water repellent component. It is presumed that the amino groups are first adsorbed to and oriented on the surface side of ammonium polyphosphate, which help the alkyl groups in component (i) as the main component to orient to the surface side, exerting excellent water repellency. By further adding a minor proportion of component (iii), formation of a water repellent film becomes easier and microscopic irregularities are created to further improve water repellency. The addition of component (iv) also contributes to an improvement in water repellency probably because due to the presence of both ends which are reactive, organic groups on the linking chain moiety provide more contribution to water repellency.

Components (i) to (iv) are described in more detail.

Component (i) in the organosilicon condensate used herein as the surface treating agent is organosilicon compound or composition of the compositional formula (1):

(R¹) a (OR²)_{b}SiO_{(4-a-b)/2} (1)

wherein R¹ is a C₁-C₆ alkyl group, R² is a C₁-C₄ alkyl group, a is a positive number of 0.75 to 1.5, b is a positive number of 0.2 to 3, satisfying 0.9 < a+b ≤ 4.

In formula (1), R¹ is a C₁-C₆ alkyl group, preferably a C₁-C₃ alkyl group. Examples include methyl, ethyl, n-propyl, isopropyl, n-butyl, isobutyl, n-pentyl and n-hexyl, with methyl being most preferred. R² is a C₁-C₄ alkyl group, for example, methyl, ethyl, n-propyl, isopropyl, n-butyl, and isobutyl, with methyl and ethyl being most preferred.

Specific examples of the organosilicon compound of the formula (1) include
CH₃Si(OCH₃)₃, CH₃Si(OC₂H₅)₃, CH₃Si(OCH(CH₃)₂)₃, CH₃CH₂Si(OCH₃)₃, CH₃CH₂Si(OC₂H₅)₃, CH₃CH₂Si(OCH(CH₃)₂)₃, C₃H₇Si (OCH₃)₃, C₃H₇Si(OC₂H₅)₃, C₃H₇Si(OCH(CH₃)₂)₃, C₄H₉Si (OCH₃)₃, C₄H₉Si(OC₂H₅)3, C₄H₉Si(OCH(CH₃)₂)₃, C₅H₁₁Si(OCH₃)_{3'} C₅H₁₁Si(OC₂H₅)₃, C₅H₁₁Si(OCH(CH₃)₂)₃, C₆H₁₃Si(OCH₃)₃, C₆H₁₃Si(OC₂H₅)₃, C₆H₁₃Si(OCH(CH₃)₂)₃

In the practice of the invention, the foregoing silanes may be used alone or in admixture of two or more, and partial hydrolyzates of mixed silanes may also be used.

As component (i), alkoxy group-containing siloxanes resulting from partial hydrolytic condensation of the foregoing silanes are preferably used. These partial hydrolyzates or siloxane oligomers preferably have 2 to 10 silicon atoms, more preferably 2 to 4 silicon atoms. Also preferred as component (i) are products resulting from reaction of alkyltrichlorosilanes of 1 to 6 carbon atoms with methanol or ethanol in water. In this case too, the siloxane oligomers preferably have 2 to 6 silicon atoms, more preferably 2 to 4 silicon atoms. Especially preferred among these siloxane oligomers are siloxane dimers represented by [CH₃(OR²)₂Si]₂O wherein R² is as defined above. The inclusion of siloxane trimer or siloxane tetramer is acceptable. Suitable siloxane oligomers have a viscosity of less than or equal to 300 mm²/s at 25° C, especially 1 to 100 mm²/s at 25° C as determined by viscosity measurement by a capillary viscometer.

Component (ii) is an amino group-containing alkoxysilane of the general formula (2) or a partial hydrolyzate thereof.

R³R⁴NR⁵-SiRb⁶_{d}(OR²)_{3-d} (2)

Herein R² is as defined above, R³ and R⁴ are each independently hydrogen or a C₁-C₁₅, preferably C₁-C₈, more preferably C₁-C₄ alkyl or aminoalkyl group, R⁵ is a C₁-C₁₈, preferably C₁-C₈, more preferably C₃ divalent hydrocarbon group, R⁶ is a C₁-C₄ alkyl group, and d is 0 or 1.

In formula (2), examples of R³ and R⁴ include methyl, ethyl, propyl, butyl, aminomethyl, aminoethyl, aminopropyl, and aminobutyl. Examples of R⁵ include alkylene groups such as methylene, ethylene, propylene and butylene. Examples of R⁶ include methyl, ethyl, propyl and butyl.

Specific examples of the amino group-containing alkoxysilane of the formula (2) include
H₂N(CH₂)₂Si(OCH₃)₃, H₂N(CH₂)₂Si(OCH₂CH₃)₃, H₂N(CH₂)₃Si(OCH₃)₃, H₂N(CH₂)₃Si(OCH₂CH₃)₃, CH₃NH(CH₂)₃Si(OCH₃)₃, CH₃NH(CH₂)₃Si(OCH₂CH₃)₃, CH₃NH (CH₂)₅Si (OCH₃)₃, CH₃NH(CH₂)₅Si(OCH₂CH₃)_{3'} H₂N(CH₂)₂NH(CH₂)₃Si(OCH₃)₃, H₂N(CH₂)₂NH(CH₂)₃Si(OCH₂CH₃)₃, CH₃NH(CH₂)₂NH(CH₂)₃Si(OCH₃)₃, CH₃NH(CH₂)₂NH(CH₂)₃Si(OCH₂CH₃)₃, C₄H₉NH(CH₂)₂NH(CH₂)₃Si(OCH₃)₃, C₄H₉NH(CH₂)₂NH(CH₂)₃Si(OCH₂CH₃)₃, H₂N(CH₂)₂SiCH₃(OCH₃)₂, H₂N(CH₂)₂SiCH₃(OCH₂CH₃)₂, H₂N(CH₂)₃SiCH₃(OCH₃)₂, H₂N(CH₂)₃SiCH₃(OCH₂CH₃)₂, CH₃NH(CH₂)₃SiCH₃(OCH₃)₂, CH₃NH(CH₂)₃SiCH₃(OCH₂CH₃)₂, CH₃NH(CH₂)₅SiCH₃(OCH₃)₂, CH₃NH(CH₂)₅SiCH₃(OCH₂CH₃)₂, H₂N(CH₂)₂NH(CH₂)₃SiCH₃(OCH₃)₂, H₂N(CH₂)₂NH(CH₂)₃SiCH₃(OCH₂CH₃)₂, CH₃NH(CH₂)₂NH(CH₂)₃SiCH₃(OCH₃)₂, CH₃NH (CH₂) ₂NH (CH₂) ₃SiCH₃ (OCH₂CH₃) ₂, C₄H₉NH(CH₂)₂NH(CH₂)₃SiCH₃(OCH₃)₂, C₄H₉NH(CH₂)₂NH(CH₂)₃SiCH₃(OCH₂CH₃)₂ Partial hydrolyzates of the foregoing alkoxysilanes are also useful.

Preferred of the foregoing examples are N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, N-(2-aminoethyl)-3-aminopropylmethyldiethoxysilane, 3-aminopropyltrimethoxysilane, 3-aminopropylmethyldimethoxysilane, 3-aminopropyltriethoxysilane, and 3-aminopropylmethyldiethoxysilane, as well as partial hydrolyzates thereof.

Component (iii) is a microparticulate inorganic oxide, examples of which include silicon oxide, titanium oxide, zinc oxide, aluminum oxide and cerium oxide. The preferred microparticulate oxides have an average particle size of 1 to 200 nm, especially 5 to 100 nm as measured by a laser scattering type particle size distribution meter. An average particle size of more than 200 nm may cause whitening of the substrate or detract from a water repelling ability. An average particle size of less than 1 nm may exacerbate the stability of the surface treating agent. The particle shape is not particularly limited although spherical or plate particles are preferred. On use of the microparticulate inorganic oxide, they are preferably dispersed in water or solvents.

From the standpoints of cost and ease of use, colloidal silica is especially preferred. Colloidal silica is dispersions of silica particles in water or alcohols such as methanol, ethanol, isobutanol or diacetone alcohol. They are commercially available, for example, under the trade name of Snowtex O, Snowtex O-40, Snowtex OXS, Snowtex OS, Snowtex OL, Snowtex OUP, methanol silica sol, and IPA-ST from Nissan Chemical Industries Ltd.

Component (iv) is a bis(alkoxysilyl) group-containing compound of the general formula (3) or a partial hydrolyzate thereof.

(R¹)ₖ(OR²)₃₋ₖSi-Y-Si(R¹)ₖ(OR²)₃₋ₖ (3)

Herein R¹ and R² are as defined above, Y is a divalent organic group, -(OSi(R⁷)₂)ₘO- or -R-(SiR⁷₂O)ₘ-SiR⁷₂-R-, R⁷ is a C₁-C₆ alkyl group, R is a divalent C₁-C₆ hydrocarbon group, m is an integer of 1 to 30, and k is 0, 1 or 2.

In formula (3), R¹ and R² are the same as in formula (1).

Y is a divalent organic group of typically 1 to 20 carbon atoms, more typically 1 to 10 carbon atoms, which may contain a halogen atom or atoms, more preferably an alkylene group or a fluorine-containing alkylene group represented by -(CH₂)ₐ(CF₂)_{b}(CH₂)_{c}- wherein a is 1 to 6, b is 1 to 10, and c is 1 to 6. Alternatively, Y is a group represented by -(OSi(R⁷)₂)ₘO- or -R-(SiR⁷₂O)ₘ-SiR⁷₂-R-. R⁷ is a C₁-C₆, preferably C₁-C₃ alkyl group, for example, methyl, ethyl, n-propyl, isopropyl, n-butyl, isobutyl, n-pentyl or n-hexyl, with methyl being most preferred. R is a C₁-C₆, preferably C₂-C₃ divalent hydrocarbon group, and more preferably an alkylene group. The subscript m is an integer of 1 to 30, especially 5 to 20. Illustrative, non-limiting examples of Y are given below.
-CH₂-, -CH₂CH₂-, -CH₂CH₂CH₂-, -CH₂CH₂CH₂CH₂-, -CH₂CH₂CH₂CH₂CH₂CH₂-, - CH₂CH₂CH₂CH₂CH₂CH₂CH₂CH₂ -, - CH₂CH₂CH₂CH₂CH₂CH₂CH₂CH₂CH₂CH₂-, -CH₂C₄F₈CH₂-, -CH₂C₆F₁₂CH₂-, -(OSi(CH₃)₂)₂O-, -(OSi(CH₃)₂)₄O-, -(OSi(CH₃)2)₆O-, -(OSi(CH₃)₂)₈O-, -CH₂CH₂Si(CH₃)₂OSi(CH₃)₂CH₂CH₂-, -CH₂CH₂(Si(CH₃)₂O)₃Si(CH₃)₂CH₂CH₂-, -CH₂CH₂(Si(CH₃)₂O)₅Si(CH₃)₂CH₂CH₂-, -CH₂CH₂ (Si (CH₃) ₂O)₇Si (CH₃) ₂CH₂CH₂-, - CH₂CH₂ (Si (CH₃) ₂O) ₉Si (CH₃) ₂CH₂CH₂ - , -CH₂CH₂(Si (CH₃) ₂O) ₁₉Si (CH₃) ₂CH₂CH₂-, -CH₂CH₂(Si(CH₃)₂O)₃₉Si(CH₃)₂CH₂CH₂-

In formula (3), k is equal to 0, 1 or 2, with k=0 being preferred for better water repellency.

Illustrative, non-limiting examples of the bis(alkoxysilyl) group-containing compound of the formula (3) are given below.
(CH₃O)₃SiCH₂Si(OCH₃)₃ , (CH₃O)₃SiCH₂CH₂Si (OCH₃)₃ , (CH₃O)₃SiCH₂CH₂CH₂CH₂Si (OCH₃)₃, (CH₃O)₃ SiCH₂CH₂CH₂CH₂CH₂CH₂Si (OCH₃) ₃ , (CH₃O)₃SiCH₂CH₂CH₂CH₂CH₂CH₂CH₂CH₂Si (OCH₃)₃, (CH₃O) ₃SiCH₂CH₂CH₂CH₂CH₂CH₂CH₂CH₂CH₂CH₂Si (OCH₃)₃ , (CH₃O)₂(CH₃)SiCH₂Si (CH₃)(OCH₃)₂, (CH₃O)₂(CH₃)SiCH₂CH₂Si (CH₃) (OCH₃)₂, (CH₃O)₂(CH₃) SiCH₂CH₂CH₂CH₂Si (CH₃) (OCH₃)₂ , (CH₃O) ₂(CH₃) SiCH₂CH₂CH₂CH₂CH₂CH₂Si (CH₃) (OCH₃)₂ , (CH₃O) ₂ (CH₃) SiCH₂CH₂CH₂CH₂CH₂CH₂CH₂CH₂Si (CH₃) (OCH₃)₂ , (CH₃O)₂ (CH₃) SiCH₂CH₂CH₂CH₂CH₂CH₂CH₂CH₂CH₂CH₂Si (CH₃) (OCH₃)₂, (CH₃O) ₃SiCH₂CH₂C₄F₈CH₂CH₂Si (OCH₃)₃, (CH₃O) ₃SiCH₂CH₂C₆F₁₂CH₂CH₂Si (OCH₃)₃, (CH₃O) ₃SiCH₂CH₂C₈F₁₆CH₂CH₂Si (OCH₃)₃, (CH₃O) ₃SiCH₂CH₂C₁₀F₂₀CH₂CH₂Si (OCH₃)₃, (CH₃O)₂ (CH₃) SiCH₂CH₂C₄F₈CH₂CH₂Si (CH₃) (OCH₃)₂, (CH₃O)₂(CH₃)SiCH₂CH₂C₆F₁₂CH₂CH₂Si(CH₃) (OCH₃)₂, (CH₃O) ₂(CH₃) SiCH₂CH₂C₈F₁₆CH₂CH₂Si (CH₃) (OCH₃)₂, (CH₃O) ₂(CH₃) SiCH₂CH₂C₁₀F₂₀CH₂CH₂Si (CH₃) (OCH₃)₂, (CH₃O)₃Si(OSi(CH₃)₂)OSi(OCH₃)₃, (CH₃O)₃Si(OSi(CH₃)₂)₂OSi(OCH₃)₃, (CH₃O)₃Si(OSi(CH₃)₂)₄OSi(OCH₃)₃, (CH₃O) ₃Si (OSi (CH₃)₂) ₆OSi (OCH₃) ₃, (CH₃O)₃Si(OSi(CH₃)₂)₈OSi(OCH₃)₃, (CH₃O)₃Si(OSi(CH₃)₂)₁₀OSi(OCH₃)₃, (CH₃O) ₃SiCH₂CH₂Si (CH₃) ₂OSi (CH₃) ₂CH₂CH₂Si (OCH₃)₃, (CH₃O)₃SiCH₂CH₂ (Si (CH₃) ₂O)₃Si (CH₃) ₂CH₂CH₂Si(OCH₃)₃, (CH₃O) ₃SiCH₂CH₂ (Si (CH₃) ₂O) ₅Si (CH₃) ₂CH₂CH₂Si(OCH₃)₃, (CH₃O)₃SiCH₂CH₂ (Si (CH₃) ₂O)₇Si(CH₃) ₂CH₂CH₂Si (OCH₃)₃, (CH₃O)₃SiCH₂CH₂ (Si (CH₃) ₂O) ₉Si (CH₃) ₂CH₂CH₂Si(OCH₃) ₃

Of these, the following compounds are preferred.
(CH₃O) ₃SiCH₂CH₂CH₂CH₂CH₂CH₂Si (OCH₃)₃, (CH₃O)₂(CH₃)SiCH₂CH₂CH₂CH₂CH₂CH₂Si(CH₃)(OCH₃)₂, (CH₃O) ₃SiCH₂CH₂C₄F₈CH₂CH₂Si (OCH₃)₃, (CH₃O)₃SiCH₂CH₂C₆F₁₂CH₂CH₂Si(OCH₃)₃, (CH₃O)₃Si(OSi(CH₃)₂)₆OSi(OCH₃)₃, (CH₃O)₃Si(OSi(CH₃)₂)₈OSi(OCH₃)_{3'} (CH₃O)₃Si(OSi(CH₃)₂)₁₀OSi(OCH₃)₃, (CH₃O)₃SiCH₂CH₂(Si(CH₃)₂O)₅Si(CH₃)₂CH₂CH₂Si(OCH₃)₃, (CH₃O) ₃SiCH₂CH₂ (Si (CH₃) ₂O) ₇Si (CH₃) ₂CH₂CH₂Si (OCH₃)₃, (CH₃O) ₃SiCH₂CH₂ (Si (CH₃)₂O) ₉Si (CH₃) ₂CH₂CH₂Si (OCH₃)₃
Partial hydrolyzates of the foregoing are also advantageously used.

In the first embodiment wherein the organosilicon condensate (as surface treating agent) is obtained from only components (i) and (ii), the proportion of these components is such that 0.5 to 49 parts by weight, preferably 5 to 30 parts by weight of component (ii) is used per 100 parts by weight of component (i). Less than 0.5 pbw of component (ii) forms an organosilicon condensate which is unstable. More than 49 parts of component (ii) adversely affects water repellency or causes a noticeable yellowing when ammonium polyphosphate is treated.

When expressed on a molar basis, the proportion of components (i) and (ii) is such that 0.01 to 0.3 mole, especially 0.05 to 0.2 mole of silicon atoms in component (ii) are available per mole of silicon atoms in component (i).

In the second embodiment wherein the organosilicon condensate is obtained from components (i), (ii) and (iii) and/or (iv), the amount of component (ii) is 0.5 to 49 parts by weight, preferably 5 to 30 parts by weight per 100 parts by weight of component (i). Less than 0.5 pbw of component (ii) forms an organosilicon condensate which is unstable. More than 49 parts of component (ii) adversely affects water repellency or causes a noticeable yellowing when ammonium polyphosphate is treated. The amount of component (iii) is 0.1 to 10 parts by weight, preferably 0.5 to 5 parts by weight per 100 parts by weight of component (i). Less than 0.1 pbw of component (iii) is less effective in exerting water repellent effects. More than 10 pbw of component (iii) is economically disadvantageous and adversely affects the stability of organosilicon condensate. The amount of component (iv) is 0.1 to 20 parts by weight, preferably 0.5 to 10 parts by weight per 100 parts by weight of component (i). Less than 0.1 pbw of component (iv) is less effective in exerting water repellent effects. More than 20 pbw of component (iv) is economically disadvantageous.

When expressed on a molar basis, the proportion of components (i) to (iv) is such that 0.01 to 0.3 mole, especially 0.05 to 0.2 mole of silicon atoms in component (ii) are available per mole of silicon atoms in components (i) + (iii) + (iv) (provided that component (iii) is included herein only when it is colloidal silica).

In preparing the organosilicon condensate as the surface treating agent using components (i) and (ii) or components (i), (ii) and (iii) and/or (iv), they are subjected to co-hydrolysis and condensation in the presence of an organic acid or inorganic acid.

In a preferred embodiment, component (i) or a mixture of component (i) and component (iii) and/or (iv), if used, is first hydrolyzed in the presence of an organic or inorganic acid, the resulting hydrolyzate is mixed with component (ii), and the mixture is further hydrolyzed in the presence of an organic or inorganic acid.

The organic or inorganic acid used in the first step of hydrolyzing component (i) or a mixture of component (i) and component (iii) and/or (iv), if used, is at least one acid which is selected from hydrochloric acid, sulfuric acid, nitric acid, methanesulfonic acid, formic acid, acetic acid, propionic acid, citric acid, oxalic acid and maleic acid, with acetic acid and propionic acid being preferred. An appropriate amount of the acid used is 2 to 40 parts by weight, especially 3 to 15 parts by weight per 100 parts by weight of component (i).

Preferably hydrolysis is effected in a state diluted with a solvent. Suitable solvents are alcoholic solvents, preferably methanol, ethanol, isopropyl alcohol and tert-butyl alcohol. An appropriate amount of the solvent is 50 to 300 parts by weight, especially 70 to 200 parts by weight per 100 parts by weight of component (i) or a mixture of component (i) and component (iii) and/or (iv), if used. Less than 50 pbw of the solvent may allow condensation to take place whereas with more than 300 pbw of the solvent, a longer time is required for hydrolysis.

An appropriate amount of water added for hydrolysis of component (i) or a mixture of component (i) and component (iii) and/or (iv) is 0.5 to 4 moles, especially 1 to 3 moles per mole of component (i) or a mixture of component (i) and component (iii) and/or (iv). With less than 0.5 mole of water added, more alkoxy groups may be left behind. More than 4 moles of water may allow too much condensation to take place. When colloidal silica, i.e., silica dispersed in water is used as component (iii), the water may be utilized as the water for hydrolysis. The preferred reaction conditions for hydrolysis of component (i) or a mixture of component (i) and component (iii) and/or (iv) include a temperature of 10 to 40°C, especially 20 to 30°C and a time of about 1 to 3 hours.

The hydrolyzate resulting from component (i) or components (i) and (iii) and/or (iv) is then reacted with component (ii). The preferred reaction conditions include a temperature of 60 to 100°C and a time of about 1 to 3 hours. At the end of reaction, the system is heated to a temperature which is higher than the boiling point of the solvent, typically alcohol, for thereby distilling off the solvent. At this point, distillation is preferably continued until the content of the overall solvents, typically alcohols (alcohol as the reaction medium and alcohol as by-product) is reduced to 30% by weight or less, especially 10% by weight or less.

The organosilicon condensate (as surface treating agent) prepared by the above-described method should preferably have a viscosity of 5 to 2,000 mm²/s at 25°C, especially 50 to 500 mm²/s at 25°C as determined by viscosity measurement by a capillary viscometer. Too high a viscosity may compromise application and storage stability and lead to a low solubility in water. Also desirably, the organosilicon condensate has a weight average molecular weight of 500 to 5,000, especially 800 to 2,000, as measured by GPC with polystyrene standards.

Water repellency is obtainable merely by blending ammonium polyphosphate with the organosilicon condensate, and preferably by coating surfaces of ammonium polyphosphate with the organosilicon condensate. The blending or surface coating may be achieved by any of well-known techniques such as phase separation, in-liquid drying, melt dispersion cooling, spray drying and in-liquid curing. Preferably, a solution of the organosilicon condensate in a volatile solvent is blended with ammonium polyphosphate for thereby coating the ammonium polyphosphate with the organosilicon condensate, after which the solvent is removed.

The proportion of ammonium polyphosphate and the organosilicon condensate used is such that there are 80 to 99.8% by weight, especially 90 to 97% by weight of APP and 0.2 to 20% by weight, especially 3 to 10% by weight of the organosilicon condensate, provided that the total amount of APP and the organosilicon condensate is 100% by weight. Too small an amount of the organosilicon condensate may lead to poor water resistance and water repellency whereas too much the organosilicon condensate may be economically disadvantageous.

In addition to the above-described organosilicon condensate, polyvinyl alcohol resins and polyester resins are also useful as the surface treating agent for ammonium polyphosphate.

The polyvinyl alcohol resins used herein include those in which some hydroxyl groups are modified with functional groups. The functional groups for modification include maleic anhydride, isocyanate and epoxy groups.

The polyvinyl alcohol resin is typically used in solution form in a solvent mixture of water and an alcohol such as methanol. By mixing ammonium polyphosphate with a solution of the polyvinyl alcohol resin and drying, a water resistant coating can be formed. The concentration of the polyvinyl alcohol resin in a solvent mixture is preferably 0.1 to 20% by weight, more preferably 1 to 15% by weight.

The proportion of ammonium polyphosphate and the polyvinyl alcohol resin used is such that there are 80 to 99.9% by weight, especially 85 to 99% by weight of APP and 0.1 to 20% by weight, especially 1 to 15% by weight of the polyvinyl alcohol resin, provided that the total amount of APP and the polyvinyl alcohol resin is 100% by weight. Too small an amount of the polyvinyl alcohol resin may lead to short surface treatment whereas too much the polyvinyl alcohol resin may result in too large a particle size due to agglomeration.

The polyester resins used herein include saturated and unsaturated polyester resins such as polyethylene terephthalate and polybutylene terephthalate. Water-dispersed copolyester resins are preferred.

In the treatment of ammonium polyphosphate, for example, ammonium polyphosphate is mixed with water-dispersed copolyester resin and dried, forming a tough coating.

The proportion of ammonium polyphosphate and the polyester resin used is such that there are 80 to 99.9% by weight, especially 85 to 99% by weight of APP and 0.1 to 20% by weight, especially 1 to 15% by weight of the polyester resin, provided that the total amount of APP and the polyester resin is 100% by weight. Too small an amount of the polyester resin may lead to short surface treatment whereas too much the polyester resin may result in too large a particle size due to agglomeration.

The surface-treated ammonium polyphosphate is preferably in particle or powder form because it enables uniform addition to the polylactic acid (A). The surface-treated ammonium polyphosphate in particle or powder form should preferably have an average particle size of up to about 50 1µm, more preferably 1 to 30 µm, as measured by a laser scattering type particle size distribution meter. The maximum particle size is preferably 100-mesh pass, especially 200-mesh pass.

The surface-treated ammonium polyphosphate (B) is added and compounded to the polylactic acid (A) to impart flame retardance thereto. For the compounding purpose, a twin-screw extruder, single-screw extruder, Banbury mixer, pressure kneader or the like may be used.

An appropriate amount of the surface-treated ammonium polyphosphate (B) compounded is 5 to 100 parts by weight, preferably 10 to 80 parts by weight per 100 parts by weight of the polylactic acid (A). Too small an amount of the surface-treated ammonium polyphosphate affords short flame retardance whereas too large an amount detracts from the tensile strength and elongation of the resin composition.

### Component C

Component (C) is a flame retardant co-agent which is typically selected from among talc, expandable graphite, melamine cyanurate compounds and polyhydric alcohols. Examples of suitable melamine cyanurate compounds include melamine cyanurate and melamine isocyanurate. Examples of suitable polyhydric alcohols include pentaerythritol, mannitol, sorbitol, trimethylolpropane, dipentaerythritol, ditrimethylolpropane, neopentyl glycol, glycerol and xylitol. These flame retardant co-agents may be used alone or in admixture.

An amount of component (C) compounded is 0 to 80 parts by weight per 100 parts by weight of component (A), and when used, preferably 1 to 80 parts by weight, more preferably 5 to 50 parts by weight per 100 parts by weight of component (A). Compounding more than 80 parts of component (C) detracts from tensile strength and elongation noticeably.

Various additives for certain purposes may be compounded in the non-halogen flame retardant resin composition of the invention as long as they do not compromise the desired properties of the composition. Suitable additives include antioxidants, UV absorbers, stabilizers, photo-stabilizers, compatibilizing agents, other non-halogen flame retardants, lubricants, fillers, adhesive aids, anti-rusting agents, and the like.

Examples of useful antioxidants include 2,6-di-t-butyl-4-methylphenol, n-octadecyl-3-(3',5'-di-t-butyl-4-hydroxyphenyl)propionate, tetrakis[methylene-3-(3,5-di-t-butyl-4-hydroxyphenyl)-propionate]methane, tris(3,5-di-t-butyl-4-hydroxybenzyl)isocyanurate, 4,4'-butylidene-bis(3-methyl-6-t-butylphenol), triethylene glycol bis[3-(3-t-butyl-4-hydroxy-5-methylphenyl)-propionate], 3,9-bis{2-[3-(3-t-butyl-4-hydroxy-5-methylphenyl)propionyloxy]-1,1-dimethylethyl}-2,4,8,10-tetraoxaspiro[5,5]undecane, 4,4-thio-bis(2-t-butyl-5-methylphenol), 2,2-methylene-bis(6-t-butyl-methylphenol), 4,4-methylene-bis(2,6-di-t-butylphenol), 1,3,5-trimethyl-2,4,6-tris(3,5-di-t-butyl-4-hydroxybenzyl)-benzene, trisnonylphenyl phosphite, tris(2,4-di-t-butylphenyl) phosphite, distearyl pentaerythritol phosphite, bis(2,4-di-t-butylphenyl)pentaerythritol phosphite, bis(2,6-di-t-butyl-4-methylphenyl)pentaerythritol phosphite, 2,2-methylene-bis(4,6-di-t-butylphenyl)octyl phosphite, tetrakis(2,4-di-t-butylphenyl)-4,4'-biphenylenediphosphonite, dilauryl-3,3'-thiodipropionate, dimyristyl-3,3'-thiodipropionate, pentaerythritol tetrakis(3-laurylthiopropionate), 2,5,7,8-tetramethyl-2(4,8,12-trimethyldecyl)chroman-2-ol, 5,7-di-t-butyl-3-(3,4-dimethylphenyl)-3H-benzofuran-2-one, 2-[1-(2-hydroxy-3,5-di-t-pentylphenyl)ethyl]-4,6-dipentylphenyl acrylate, 2-t-butyl-6-(3-t-butyl-2-hydroxy-5-methylbenzyl)-4-methylphenyl acrylate, tetrakis(methylene)-3-(dodecylthiopropionate)methane, etc.

Examples of useful stabilizers include metal soap family stabilizers such as lithium stearate, magnesium stearate, calcium laurate, calcium ricinoleate, calcium stearate, barium laurate, barium ricinoleate, barium stearate, zinc laurate, zinc ricinoleate, and zinc stearate; various organotin stabilizers of laurate, maleate and mercapto families; various lead-base stabilizers such as lead stearate and tribasic lead sulfate; epoxy compounds such as epoxidized vegetable oils; phosphite compounds such as alkyl allyl phosphites, trialkyl phosphites; β-diketone compounds such as dibenzoylmethane, dehydroacetic acid; polyols such as sorbitol, mannitol, pentaerythritol; hydrotalcites, and zeolites.

Examples of useful photo-stabilizers include benzotriazole-derived UV absorbers, benzophenone-derived UV absorbers, salicylate-derived UV absorbers, cyanoacrylate-derived UV absorbers, oxalic anilide-derived UV absorbers, hindered amine-derived photo-stabilizers, etc.

Examples of useful compatibilizing agents include acrylic-organopolysiloxane copolymers, partial crosslinked products of silica and organopolysiloxane, silicone powder, maleic anhydride graft modified polyolefins, carboxylic acid graft modified polyolefins, polyolefin graft modified organopolysiloxanes, etc.

Examples of useful adhesive aids include various alkoxysilanes.

Examples of non-halogen flame retardants which can be used herein include zinc borate, zinc stannate, various phosphorus flame retardants, melamine cyanurate, guanidine sulfamate, photo-oxidized titanium. Suitable fillers include silicic acid, calcium carbonate, titanium oxide, carbon black, kaolin clay, calcined clay, aluminum silicate, magnesium silicate, calcium silicate and barite.

The flame retardant resin composition may be prepared by combining components (A) and (B) and optionally component (C) and additives, and uniformly mixing in a customary manner. As a general rule, for example, a mixture of ingredients is charged to a suitable mixer such as a twin-screw extruder, single-screw extruder, Banbury mixer or pressure kneader where the ingredients are kneaded under heated conditions.

The flame retardant resin composition thus obtained is fully safe, flame retardant, and water resistant and exhibits a good dispersion of APP in resin. It will find use as packaging containers, tire covers and floor mats in automobiles, housings of electric appliances, and the like.

### EXAMPLE

Synthesis Examples, Examples and Comparative Examples are given below for further illustrating the invention. They should not be construed as limiting the invention. In these Examples, the viscosity is as measured at 25°C by a capillary viscometer; the weight average molecular weight (Mw) is as determined by gel permeation chromatography (GPC) with polystyrene standards; and the average particle size is as measured by a laser scattering type particle size distribution meter.

### Synthesis Example 1

### Synthesis of silicone-base water repellent treating agent 1

A 500-ml four-necked flask equipped with a condenser, thermometer and dropping funnel was charged with 85 g (0.37 mol calculated as dimer) of methyltrimethoxysilane oligomer, 154 g of methanol and 5.1 g of acetic acid. With stirring, 6.8 g (0.37 mol) of water was fed to the flask, followed by stirring at 25°C for 2 hours. Then 17.7 g (0.08 mol) of 3-aminopropyltriethoxysilane was added dropwise. Thereafter, the flask was heated to the reflux temperature of methanol at which reaction took place for one hour. An ester adapter was attached, after which methanol was distilled off until the internal temperature reached 110°C, obtaining 81 g of a pale yellow clear solution having a viscosity of 71 mm²/s (Mw = 1,100). The amount of residual methanol in the system was 5% by weight. This is designated silicone-base water repellent treating agent 1.

### Synthesis Example 2

Synthesis of silicone-base water repellent treating agent 2 A 500-ml four-necked flask equipped with a condenser, thermometer and dropping funnel was charged with 199 g (0.88 mol calculated as dimer) of methyltrimethoxysilane oligomer, 120 g of methanol and 11.8 g of acetic acid. With stirring, 19.8 g (0.88 mol of water) of Snowtex O (Nissan Chemical Industries Ltd., aqueous dispersion with 20% SiO₂ content, average particle size 10-20 nm) was fed to the flask, followed by stirring at 25°C for 2 hours. Then 38.9 g (0.18 mol) of 3-aminopropyltriethoxysilane was added dropwise. Thereafter, the flask was heated to the reflux temperature of methanol at which reaction took place for one hour. An ester adapter was attached, after which alcohols were distilled off until the internal temperature reached 110°C, obtaining 209 g of a pale yellow clear solution having a viscosity of 460 mm²/s (Mw = 1,000). The amount of residual alcohols (methanol + ethanol) in the system was 2% by weight. This is designated silicone-base water repellent treating agent 2.

### Synthesis Example 3

### Synthesis of surface-treated APP 1

To 100 parts by weight of an ammonium polyphosphate (molecular weight 150,000, P content 20 wt%, bulk density 0.7 g/cm³, average particle size 6.2 µm) were added 10 parts by weight of silicone-base water repellent treating agent 1 of Synthesis Example 1 and 100 parts by weight of ethanol. The ingredients were stirred for 30 minutes, after which the ethanol was distilled off in vacuum. Grinding on a grinder yielded silicone-treated ammonium polyphosphate having an average particle size of 10 µm, designated surface-treated APP 1.

### Synthesis Example 4

### Synthesis of surface-treated APP 2

The procedure of Synthesis Example 3 was repeated except that 5 parts by weight of silicone-base water repellent treating agent 2 of Synthesis Example 2 was used instead of the silicone-base water repellent treating agent 1. There was obtained silicone-treated ammonium polyphosphate having an average particle size of 10 µm, designated surface-treated APP 2.

### Synthesis Example 5

### Synthesis of surface-treated APP 3

To 100 parts by weight of an ammonium polyphosphate (molecular weight 150,000, P content 20 wt%, bulk density 0.7 g/cm³, average particle size 6.2 µm) were added 20 parts by weight of maleic anhydride-modified PVA (by Japan VAM & Poval Co., Ltd., 50% methanol solution) and 100 parts by weight of ethanol. The ingredients were stirred for 30 minutes, after which the ethanol was distilled off in vacuum. Grinding on a grinder yielded silicone-treated ammonium polyphosphate having an average particle size of 10 µm, designated surface-treated APP 3.

### Synthesis Example 6

### Synthesis of surface-treated APP 4

To 100 parts by weight of an ammonium polyphosphate (molecular weight 150,000, P content 20 wt%, bulk density 0.7 g/cm³, average particle size 6.2 µm) were added 30 parts by weight of Vylonal® MD1200 (by Toyobo Co., Ltd., water-dispersed copolyester resin, solids 34%) and 100 parts by weight of ethanol. The ingredients were stirred for 30 minutes, after which the ethanol was distilled off in vacuum. Grinding on a grinder yielded silicone-treated ammonium polyphosphate having an average particle size of 10 µm, designated surface-treated APP 4.

### Synthesis Example 7

### Synthesis of surface-treated APP 5

To 100 parts by weight of an ammonium polyphosphate (molecular weight 150,000, P content 20 wt%, bulk density 0.7 g/cm³, average particle size 6.2 µm) were added 5 parts by weight of linear silicone oil (viscosity 10,000 mm²/s) and 100 parts by weight of toluene. The ingredients were stirred for 30 minutes, after which the toluene was distilled off in vacuum. Grinding on a grinder yielded silicone-treated ammonium polyphosphate having an average particle size of 10 µm, designated surface-treated APP 5.

### Synthesis Example 8

### Synthesis of surface-treated APP 6

To 100 parts by weight of an ammonium polyphosphate (molecular weight 150,000, P content 20 wt%, bulk density 0.7 g/cm³, average particle size 6.2 µm) were added 30 parts by weight of hexamethyldisilazane and 25 parts by weight of methyl isobutyl ketone. The ingredients were heated at 100°C and stirred for 3 hours, after which the methyl isobutyl ketone was distilled off in vacuum. Grinding on a grinder yielded pale brown silane-treated ammonium polyphosphate having an average particle size of 10 µm, designated surface-treated APP 6.

### Examples 1-9 and Comparative Examples 1-7

Flame retardant resin compositions were prepared by compounding amounts of the ingredients as shown in Tables 1 to 4. By the tests shown below, these compositions were evaluated for flame retardance, evolution of formaldehyde, and water resistance. The results are also shown in Tables 1 to 4.

### Flame retardance

A specimen of 1.6 mm thick was prepared from each composition by means of a three-stage press machine at a temperature 240°C, a heating time 30 seconds, and a pressure 30 MPa. The specimen was examined for flame retardance by the UL-94 test.

### Evolution of formaldehyde

A gas collecting bag of polyvinyl fluoride having a volume of 5 L was opened, charged with 1 kg of the flame retardant resin composition, and sealed with adhesive tape in an air tight manner. The bag was held at room temperature for one week, after which the inside air was drawn and examined by an instrument equipped with a detector tube No. 91LL (Gastec Corp.). A reading of the detector tube which is equal to or above 0.05 ppm indicates the evolution of formaldehyde and a reading of less than 0.05 ppm indicates no evolution.

### Water resistance

A plate of 100 mm x 100 mm x 3 mm thick was prepared from the composition by means of a three-stage press machine at a temperature 240°C, a heating time 30 seconds, and a pressure 30 MPa. After cooling, the plate was placed in a vat full of water and held on the bottom by placing a weight on the top. After 24 hours of immersion in water, the plate was taken out and examined whether its surface became slimy. Water resistance was rated good (O) for no slim and poor (×) for slimy surface.

**Table 1**

| Formulation | Example | | | | |
|---|---|---|---|---|---|
| | 1 | 2 | 3 | 4 | 5 |
| Polylactic acid ¹⁾ | 100 | 100 | 100 | 100 | 100 |
| Surface-treated APP 1 | 65 | - | - | - | 50 |
| Surface-treated APP 2 | - | 65 | - | - | - |
| Surface-treated APP 3 | - | - | 65 | - | - |
| Surface-treated APP 4 | - | - | - | 65 | - |
| Talc ²⁾ | - | - | - | - | 15 |
| Test results | | | | | |
| Flame retardance UL-94 | V-0 | V-0 | V-0 | V-0 | V-0 |
| Evolution of formaldehyde | no | no | no | no | no |
| Water resistance | O | O | O | O | O |

**Table 2**

| Formulation | Example | | | |
|---|---|---|---|---|
| | 6 | 7 | 8 | 9 |
| Polylactic acid ¹⁾ | 100 | 100 | 100 | 100 |
| Surface-treated APP 1 | 50 | - | 50 | - |
| Surface-treated APP 2 | - | 40 | - | 35 |
| Talc ²⁾ | - | 25 | - | - |
| Expandable graphite ³⁾ | 15 | - | - | - |
| Triazine ⁴⁾ | - | - | 5 | 15 |
| Test results | | | | |
| Flame retardance UL-94 | V-0 | V-0 | V-0 | V-0 |
| Evolution of formaldehyde | no | no | no | no |
| Water resistance | O | O | O | O |

**Table 3**

| Formulation | Comparative Example | | | |
|---|---|---|---|---|
| | 1 | 2 | 3 | 4 |
| Polylactic acid ¹⁾ | 100 | 100 | 100 | 100 |
| Surface-treated APP 1 | - | 4 | 4 | - |
| Non-treated APP ⁵⁾ | - | - | - | 65 |
| Talc ²⁾ | - | - | 25 | - |
| Test results | | | | |
| Flame retardance UL-94 | not 94V | not 94V | not 94V | V-1 |
| Evolution of formaldehyde | no | no | no | no |
| Water resistance | O | O | O | × |

**Table 4**

| Formulation | Comparative Example | | |
|---|---|---|---|
| | 5 | 6 | 7 |
| Polylactic acid ¹⁾ | 100 | 100 | 100 |
| Melamine-formaldehyde resin-treated APP ⁶⁾ | 65 | - | - |
| Surface-treated APP 5 | - | 65 | - |
| Surface-treated APP 6 | - | - | 65 |
| Test results | | | |
| Flame retardance UL-94 | V-1 | not 94V | not 94V |
| Evolution of formaldehyde | detected | no | no |
| Water resistance | O | × | × |

The ingredients used are as follows.
1) Polylactic acid: Lacea H-100J by Mitsui Chemicals Co., Ltd., incipient pyrolysis temperature 280°
2) Talc: Talc A by Fuji Talc Industry Co., Ltd.
3) Expandable graphite: SYZR 2002 by Sanyo Trade Co., Ltd.
4) Triazine: Nonen R014-2 by Marubishi Oil Chemical Co., Ltd.
5) Non-treated APP: Pekoflam 204P by Clariant
6) Melamine-formaldehyde resin-treated APP: TERRAJU C-30 by Budenheim Co.

For the avoidance of doubt, it is confirmed explicitly that when numerical ranges are stated herein, upper and lower limits of those ranges will be associated with different technical criteria and are hence able to be treated separately from one another.

## Claims

1. A flame retardant resin composition comprising:
(A) 100 parts by weight of polylactic acid;
(B) 5 to 100 parts by weight of an ammonium polyphosphate surface treated with a surface treating agent which does not generate formaldehyde under room temperature conditions, does not generate halogen upon combustion, and imparts water resistance; and
(C) 0 to 80 parts by weight of a flame retardant co-agent,
wherein the surface treating agent in component (B) is any one selected from a group consisting of a polyester resin, a polyvinyl alcohol resin and an organosilicon condensate comprising
a co-hydrolytic condensate obtainable through co-hydrolytic condensation of (i) 100 parts by weight of organosilicon compound having the general formula (1) and (ii) 0.5 to 49 parts by weight of amino group-containing alkoxysilane having the general formula (2) or partial hydrolysate thereof, in the presence of organic acid or inorganic acid, or
a co-hydrolytic condensate obtainable through co-hydrolytic condensation of (i) 100 parts by weight of organosilicon compound having the general formula (1), (ii) 0.5 to 49 parts by weight of amino group-containing alkoxysilane having the general formula (2) or a partial hydrolysate thereof, and (iii) 0.1 to 10 parts by weight of microparticulate inorganic oxide and/or (iv) 0.1 to 20 parts by weight of bis(alkoxysilyl) group-containing compound having the general formula (3) or partial hydrolysate thereof, in the presence of organic acid or inorganic acid,
the general formulae (1), (2) and (3) being:
(R¹)ₐ(OR²)_{b}SiO_{(4-a-b)/2} (1)
wherein R¹ is C₁-C₆ alkyl group, R² is C₁-C₄ alkyl group, a is a positive number of 0.75 to 1.5, b is a positive number of 0.2 to 3, satisfying 0.9 < a+b ≤ 4,
R³R⁴NR⁵-SiR⁶_{d}(OR²)_{3-d} (2)
wherein R² is as defined above, R³ and R⁴ are each independently hydrogen or C₁-C₁₅ alkyl or aminoalkyl group, R⁵ is a divalent C₁-C₁₈ hydrocarbon group, R⁶ is a C₁-C₄ alkyl group, and d is 0 or 1,
(R¹)ₖ(OR²)₃₋ₖSi-Y-Si (R¹)ₖ(OR²)₃₋ₖ (3)
wherein R¹ and R² are as defined above, Y is a divalent organic group, -(OSi (R⁷)₂)ₘO- or -R-(SiR⁷₂O)ₘ-SiR⁷₂-R-, R⁷ is a C₁-C₆ alkyl group, R is a divalent C₁-C₆ hydrocarbon group, m is an integer of 1 to 30, and k is 0, 1 or 2.

2. The flame retardant resin composition of claim 1 wherein the polylactic acid resin has an incipient pyrolysis temperature of 240°C to 360°C.

3. The flame retardant resin composition of claim 1 or 2 wherein the organosilicon compound (i) is a siloxane dimer represented by (CH₃(OR²)₂Si]₂O wherein R² is as defined above.

4. The flame retardant resin composition of any one of claims 1 to 3 wherein the bis(alkoxysilyl) group-containing compound (iv) is selected from the group consisting of:
(CH₃O)₃SiCH₂CH₂CH₂CH₂CH₂CH₂Si(OCH₃)₃,
(CH₃O)₂CH₃SiCH₂CH₂CH₂CH₂CH₂CH₂SiCH₃(OCH₃)₂,
(CH₃O)₃Si(OSi(CH₃)₂)₆OSi(OCH₃)₃,
(CH₃O)₃Si(OSi(CH₃)₂)₈OSi(OCH₃)₃,
(CH₃0)3Si(OSi(CH₃)_{z})₁₀OSi(OCH₃),
(CH₃O)₃SiCH₂CH₂(Si(CH₃)₂O)₅Si(CH₃)₂CH₂CH₂Si(OCH₃)₃,
(CH₃O)₃SiCH₂CH₂(Si(CH₃)₂O)₇Si(CH₃)₂CH₂CH₂Si(OCH₃)₃,
(CH₃O)₃SiCH₂CH₂(Si(CH₃)₂O)₉Si(CH₃)₂CH₂CH₂Si(OCH₃)₃, (CH₃O)₃SiCH₂CH₂C₄F₈CH₂CH₂Si(OCH₃)₃, and
(CH₃O)₃SiCH₂CH₂C₆F₁₂CH₂CH₂Si(OCH₃)₃.

5. The flame retardant resin composition of any one of claims 1 to 4 wherein the ammonium polyphosphate in component (B) has a molecular weight of 2,000 to 10,000,000 and an average particle size of up to 30 µm.

6. The flame retardant resin composition of any one of claims 1 to 5 wherein the flame retardant co-agent (C) is talc and compounded in an amount of 1 to 80 parts by weight.

7. The flame retardant resin composition of any one of claims 1 to 5 wherein the flame retardant co-agent (C) is expandable graphite and compounded in an amount of 1 to 80 parts by weight.

8. The flame retardant resin composition of any one of claims 1 to 5 wherein the flame retardant co-agent (C) is a melamine cyanurate compound and compounded in an amount of 1 to 80 parts by weight.

9. A method comprising the preparation of a resin composition according to any one of claims 1 to 8 by combining said components thereof.

10. A method according to claim 9 comprising a preliminary stage of surface treating the ammonium polyphosphate with the surface treating agent.

11. A method according to claim 10 in which the surface treating agent is an organosilicon condensate and the method includes the preparation of the surface treating agent by cohydrolytic condensation.

## Patentansprüche

1. Flammhemmende Harzzusammensetzung, umfassend:
(A) 100 Gewichtsteile Polymilchsäure;
(B) 5 bis 100 Gewichtsteile eines Ammoniumpolyphosphats, das mit einem Oberflächenbehandlungsmittel oberflächenbehandelt ist, das unter Raumtemperaturbedingungen kein Formaldehyd bildet, beim Verbrennen kein Halogen bildet und Wasserbeständigkeit verleiht; und
(C) 0 bis 80 Gewichtsteile eines flammhemmenden Co-Agens,
worin das Oberflächenbehandlungsmittel in Komponente (B) ein beliebiges aus der aus Folgendem bestehenden Gruppe ausgewähltes ist: einem Polyesterharz, einem Polyvinylalkoholharz und einem Organosiliciumkondensat, das Folgendes umfasst:
ein cohydrolytisches Kondensat, erhältlich durch cohydrolytische Kondensation von (1) 100 Gewichtsteilen einer Organosiliciumverbindung der allgemeinen Formel (1) und (ii) 0,5 bis 49 Gewichtsteilen eines aminogruppenhältigen Alkoxysilans der allgemeinen Formel (2) oder eines partiellen Hydrolysats davon in Gegenwart einer organischen Säure oder anorganischen Säure, oder
ein cohydrolytisches Kondensat, erhältlich durch cohydrolytische Kondensation von (i) 100 Gewichtsteilen einer Organosiliciumverbindung der allgemeinen Formel (1), (ii) 0,5 bis 49 Gewichtsteilen eines aminogruppenhältigen Alkoxysilans der allgemeinen Formel (2) oder eines partiellen Hydrolysats davon und (iii) 0,1 bis 10 Gewichtsteilen eines mikropartikulären anorganischen Oxids und/oder (iv) 0,1 bis 20 Gewichtsteilen einer Bis(alkoxysilyl)gruppen-hältigen Verbindung der allgemeinen Formel (3) oder eines partiellen Hydrolysats davon in Gegenwart einer organischen Säure oder anorganischen Säure,
wobei die Formeln (1), (2) und (3) wie folgt sind:
(R¹)ₐ(OR ²)_{b}SiO(_{4-a-b})_{/2} (1)
worin R¹ eine C₁-C₆-Alkylgruppe ist, R² eine C₁-C₄-Alkylgruppe ist, a eine positive Zahl von 0,75 bis 1,5 ist, b eine positive Zahl von 0,2 bis 3 ist, wobei gilt: 0,9 < a+b < 4,
R³R⁴NR⁵-SiR⁶_{d}(OR²)_{3-d} (2)
worin R² wie oben definiert ist, R³ und R⁴ jeweils unabhängig voneinander Wasserstoff oder eine C₁-C₁₅-Alkyl- oder -Aminoalkylgruppe sind, R⁵ eine zweiwertige C₁-C₁₈-Kohlenwasserstoffgruppe ist, R⁶ eine C₁-C₄-Alkylgruppe ist und d = 0 oder 1 ist,
(R¹)ₖ(OR²)₃₋ₖSi-Y-Si(R¹)ₖ(OR²)₃₋ₖ (3)
worin R¹ und R² wie oben definiert sind, Y eine zweiwertige organische Gruppe, -(OSi(R⁷)₂)ₘO- oder -R-(SiR₇20)ₘ-SiR⁷₂-R- ist, wobei R⁷ eine C₁-C₆-Alkylgruppe ist, R eine zweiwertige C₁-C₆-Kohlenwasserstoffgruppe ist, m eine ganze Zahl von 1 bis 30 ist und k = 0, 1 oder 2 ist.

2. Flammhemmende Harzzusammensetzung nach Anspruch 1, worin die Polymilchsäure eine Pyrolysebeginntemperatur von 240°C bis 360°C aufweist.

3. Flammhemmende Harzzusammensetzung nach Anspruch 1 oder 2, worin die Organosiliciumverbindung (i) ein Siloxandimer ist, das durch [CH₃(OR²)₂Si]₂O dargestellt ist, worin R² wie oben definiert ist.

4. Flammhemmende Harzzusammensetzung nach einem der Ansprüche 1 bis 3, worin die Bis(alkoxysilyl)gruppen-hältige Verbindung (iv) aus der aus Folgendem bestehenden Gruppe ausgewählt ist:
(CH₃O)₃SiCH₂CH₂CH₂CH₂CH₂CH₂Si(OCH₃)₃,
(CH₃O)₂CH₃SiCH₂CH₂CH₂CH₂CH₂CH₂SiCH₃(OCH₃)₂,
(CH₃O)₃Si(OSi(CH₃)₂)₆OSi(OCH₃)₃,
(CH₃O)₃Si(OSi(CH₃)₂)₈OSi(OCH₃)₃,
(CH₃O)₃Si(OSi(CH₃)₂)₁₀OSi(OCH₃)₃,
(CH₃O)₃SiCH₂CH₂(Si(CH₃)₂O)₅Si(CH₃)₂CH₂CH₂Si(OCH₃)₃,
(CH₃O)₃SiCH₂CH₂(Si(CH₃)₂O)₇OSi(CH₃)₂CH₂CH₂Si(OCH₃)₃,
(CH₃O)₃SiCH₂CH₂(Si(CH₃)₂O)₉Si(CH₃)₂CH₂CH₂Si(OCH₃)₃,
(CH₃O)₃SiCH₂CH₂C₄F₈CH₂CH₂Si(OCH₃)₃ und
(CH₃O)₃SiCH₂CH₂C₆F₁₂CH₂CH₂Si(OCH₃)₃.

5. Flammhemmende Harzzusammensetzung nach einem der Ansprüche 1 bis 4, worin das Ammoniumpolyphosphat in Komponente (B) ein Molekulargewicht von 2.000 bis 10.000.000 und eine mittlere Teilchengröße von bis zu 30 µm aufweist.

6. Flammhemmende Harzzusammensetzung nach einem der Ansprüche 1 bis 5, worin das flammhemmende Co-Agens (C) Talk ist und in einer Menge von 1 bis 80 Gewichtsteilen eingemischt ist.

7. Flammhemmende Harzzusammensetzung nach einem der Ansprüche 1 bis 5, worin das flammhemmende Co-Agens (C) expandierbarer Graphit ist und in einer Menge von 1 bis 80 Gewichtsteilen eingemischt ist.

8. Flammhemmende Harzzusammensetzung nach einem der Ansprüche 1 bis 5, worin das flammhemmende Co-Agens (C) eine Melamincyanurat-Verbindung ist und in einer Menge von 1 bis 80 Gewichtsteilen eingemischt ist.

9. Verfahren, das die Herstellung einer Harzzusammensetzung nach einem der Ansprüche 1 bis 8 durch Vereinigen ihrer Komponenten umfasst.

10. Verfahren nach Anspruch 9, das eine vorbereitende Stufe der Oberflächenbehandlung des Ammoniumpolyphosphats mit dem Oberflächenbehandlungsmittel umfasst.

11. Verfahren nach Anspruch 10, worin das Oberflächenbehandlungsmittel ein Organosiliciumkondensat ist und das Verfahren die Herstellung des Oberflächenbehandlungsmittels durch cohydrolytische Kondensation umfasst.

## Revendications

1. Composition de résine ignifuge comprenant:
(A) 100 parties en poids d'acide polylactique;
(B) 5 à 100 parties en poids d'ammonium polyphosphate dont la surface est traitée avec un agent de traitement de surface qui ne produit pas de formaldéhyde sous des conditions de température ambiante, ne produit pas d'halogène lors de la combustion et confère une résistance à l'eau; et
(C) 0 à 80 parties en poids d'un coagent ignifuge;
où l'agent de traitement de surface dans le composant (B) est un quelconque sélectionné dans le groupe consistant en une résine de polyester, une résine d'alcool polyvinylique et un condensé d'organosilicium comprenant
un condensat cohydrolithique pouvant être obtenu par condensation cohydrolithique de (i) 100 parties en poids du composé d'organosilicium ayant la formule générale (1) et (ii) 0,5 à 49 parties en poids d'alcoxysilane contenant un groupe amino de la formule générale (2) ou l'hydrolysat partiel de celui-ci, en présence de l'acide organique ou de l'acide inorganique, ou
un condensat cohydrolithique pouvant être obtenu par la condensation cohydrolithique de (i) 100 parties en poids du composé d'organosilicium de la formule générale (1), (ii) 0,5 à 49 parties en poids de l'alcoxysilane contenant le groupe amino de la formule générale (2) ou un hydrolysat partiel de celui-ci, et (iii) 0,1 à 10 parties en poids d'oxyde inorganique microparticulaire et/ou (iv) 0,1 à 20 parties en poids d'un composé contenant un groupe bis(alcoxysilyle) de la formule générale (3) ou l'hydrolysat partiel de celui-ci, en présence de l'acide organique ou de l'acide inorganique, les formules générales (1), (2) et (3) étant:
(R¹)ₐ(OR²)_{b}SiO_{(4-a-b)/2} (1)
où R¹ est un groupe alkyleC₁-C₆, R² est un groupe alkyleC₁-C₄, a est un nombre positif de 0,75 à 1,5, b est un nombre positif de 0,2 à 3, satisfaisant à 0,9 < a+b ≤ 4,
R³R⁴NR⁵-SiR⁶_{d} (OR²)_{3-d} (2)
où R² est comme défini ci-dessus, R³ et R⁴ sont chacun indépendamment hydrogène ou alkyleC₁-C₁₅ ou un groupe aminoalkyle, R⁵ est un groupe hydrocarbure C₁-C₁₈ divalent, R⁶ est un groupe alkyleC₁-C₄ et d est 0 ou 1,
(R¹)ₖ(OR²)₃₋ₖSi-Y-Si(R¹)ₖ(OR²)₃₋ₖ (3)
où R¹ et R² sont comme définis ci-dessus, Y est un groupe organique divalent, (OSi (R⁷)2)ₘO- ou -R-(SiR⁷₂O)ₘ-SiR⁷₂-R-, R⁷ est un groupe alkyle C₁-C₆, R est un groupe hydrocarbure C₁-C₆ divalent, m est un entier de 1 à 30, et k est 0, 1 ou 2.

2. Composition de résine ignifuge selon la revendication 1, dans laquelle la résine d'acide polylactique a une température de pyrolyse naissante de 240°C à 360°C.

3. Composition de résine ignifuge selon la revendication 1 ou 2, dans laquelle le composé d'organosilicium (1) est un dimère de siloxane représenté par [CH₃(OR²)₂Si]₂O où R² est comme défini ci-dessus.

4. Composition de résine ignifuge selon l'une quelconque des revendications 1 à 3, dans laquelle le composé (iv) contenant le groupe bis(alcoxysilyl) est sélectionné dans le groupe consistant en:
(CH₃O)₃SiCH₂CH₂CH₂CH₂CH₂CH₂Si (OCH₃)₃,
(CH₃O)₂,CH₃SiCH₂CH₂CH₂CH₂CH₂CH₂SiCH₃(OCH₃)₂,
(CH₃O) ₃Si (OSi (CH₃) ₂) ₆OSi (OCH₃) ₃,
(CH₃O)₃Si (OSi(CH₃)₂)₈OSi (OCH₃)₃,
(CH₃O) ₃Si (OSi (CH₃) ₂) ₁₀Si (OCH₃) ₃,
(CH₃O) ₃SiCH₂CH₂ (Si(CH₃) ₂O)₅Si (CH₃) ₂CH₂CH₂Si (OCH₃) ₃,
(CH₃O) ₃SiCH₂CH₂ (Si(CH₃) ₂O)₇Si (CH₃) ₂CH₂CH₂Si (OCH₃) ₃,
(CH₃O)₃SiCH₂CH₂(Si(CH₃)₂O)₉Si(CH₃)₂CH₂CH₂Si(OCH₃)₃,
(CH₃O)₃SiCH₂CH₂C₄F₈CH₂CH₂Si(OCH₃)₃ et
(CH₃O)₃SiCH₂CH₂C₆F₁₂CH₂CH₂Si(OCH₃)₃.

5. Composition de résine ignifuge selon l'une quelconque des revendications 1 à 4, dans laquelle le polyphosphate d'ammonium dans le composant (B) a un poids moléculaire de 2000 à 10 000 000 et une taille de particule moyenne jusqu'à 30 µm.

6. Composition de résine ignifuge selon l'une quelconque des revendications 1 à 5, dans laquelle le coagent ignifuge (C) est le talc et est malaxé en une quantité de 1 à 80 parties en poids.

7. Composition de résine ignifuge selon l'une quelconque des revendications 1 à 5, dans laquelle le coagent ignifuge C est du graphite expansible et est malaxé en une quantité de 1 à 80 parties en poids.

8. Composition de résine ignifuge selon l'une quelconque des revendications 1 à 5, dans laquelle le coagent ignifuge C est un composé de cyanure de mélamine et est malaxé en une quantité de 1 à 80 parties en poids.

9. Méthode comprenant la préparation d'une composition de résine selon l'une quelconque des revendications 1 à 8 en combinant lesdits composants de celle-ci.

10. Méthode selon la revendication 9, comprenant une étape préliminaire de traitement de surface du polyphosphate d'ammonium avec l'agent de traitement de surface.

11. Méthode selon la revendication 10, dans laquelle l'agent de traitement de surface est un condensat d'organosilicium, et la méthode comprend la préparation de l'agent de traitement de surface par condensation cohydrolithique.
